(19) Europäisches Patentamt
European Patent Office
Office européen des brevets

(11) **EP 3 858 643 B1**

## (12) EUROPEAN PATENT SPECIFICATION

(45) Date of publication and mention
of the grant of the patent:
**17.04.2024 Bulletin 2024/16**

(21) Application number: **19864525.1**

(22) Date of filing: **11.07.2019**

(51) International Patent Classification (IPC):
*B60C 13/00* (2006.01)      *B60C 11/24* (2006.01)

(52) Cooperative Patent Classification (CPC):
**B60C 13/02; B60C 11/24; B60C 13/00;**
B60C 2200/06

(86) International application number:
**PCT/JP2019/027596**

(87) International publication number:
**WO 2020/066227 (02.04.2020 Gazette 2020/14)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2018 JP 2018178343**

(43) Date of publication of application:
**04.08.2021 Bulletin 2021/31**

(73) Proprietor: **The Yokohama Rubber Co., Ltd.
Kanagawa Prefecture, 254-8601 (JP)**

(72) Inventor: **ASANO, Tomohiro
Hiratsuka-shi, Kanagawa 254-8601 (JP)**

(74) Representative: **Dilg, Haeusler, Schindelmann
Patentanwaltsgesellschaft mbH
Leonrodstraße 58
80636 München (DE)**

(56) References cited:
EP-A1- 3 212 444      EP-B1- 3 212 444
WO-A1-2007/123184     WO-A1-2016/067149
JP-A- H04 129 807     JP-A- 2003 200 716
JP-A- 2008 174 139    JP-A- 2008 174 139
JP-A- 2013 023 016    US-A- 4 144 921

**Description**

Technical Field

The present invention relates to a pneumatic tire.

Background Art

A heavy duty pneumatic tire for trucks and buses driving on paved roads and a pneumatic tire for off-road for driving on uneven grounds include a projecting rib-shaped side protector on the outer surface of sidewall portion. The side protector is formed on the sidewall portion such that the sidewall portion does not burst (cut burst) by coming into contact with curbs, barriers on uneven grounds, or the like.

The side protector is typically formed with, on the surface, a wear indicator to recognize the wear threshold (for example, Patent Document 1). By the disappearance of the wear indicator, the driver or the like can perceive that the wear threshold has been reached and take measures such as tire replacement.

Citation List

Patent Literature

Patent Document 1: JP 2008-174139A

US 4 144 921 discloses a pneumatic tire with an internal damage indicator which shows the accumulated fatigue or internal damage of the tire due to running same at pressures below that required for maximum tire life.

EP 3 212 444 A0 discloses a tyre for heavy load vehicle wheels and more preferably to a tyre for bus or heavy load vehicle wheels for mainly urban use.

WO 2007/123184 A1 discloses a pneumatic tire in which the deterioration of a tire material in lapse of time can be visually confirmed from its external appearance to determine the service life of the tire.

Summary of Invention

Technical Problem

However, in a case where only the wear indicator is disposed on the side protector, the stress is locally concentrated on the wear indicator at the time of tire rotation, which may become a starting point of cracks.

In light of the foregoing, an object of the present invention is to provide a pneumatic tire in which even when a wear indicator is provided, visibility and cracking resistance of the wear indicator can be improved.

Solution to Problem

In order to solve the problems described above and achieve an object, a pneumatic tire according to an aspect of the present invention includes, a carcass layer extending between a pair of left and right bead cores, a side protector provided on a side wall portion located on a tire outer side of the carcass layer, rising from a side profile of the tire to the tire outer side, and extending in a tire circumferential direction, a wear indicator hole provided on a surface of the side protector, extending from the surface of the side protector to a tire inner side, and serving as an indication of wear of the side protector, and a guide recess portion provided on the surface of the side protector and extending from the surface of the side protector to the tire inner side, the guide recess portion terminating in a vicinity of the wear indicator hole, the guide recess portion separating from the wear indicator hole and, in a projection view in the tire circumferential direction perpendicular to a surface of the side wall portion, at least a portion of the guide recess portion overlapping the wear indicator hole.

In order to solve the problems described above and achieve an object, a pneumatic tire according to a further aspect of the present invention includes, a carcass layer extending between a pair of left and right bead cores, a side protector provided on a side wall portion located on a tire outer side of the carcass layer, rising from a side profile of the tire to the tire outer side, and extending in a tire circumferential direction, a wear indicator hole provided on a surface of the side protector, extending from the surface of the side protector to a tire inner side, and serving as an indication of wear of the side protector, a guide recess portion provided on the surface of the side protector and extending from the surface of the side protector to the tire inner side, the guide recess portion terminating in a vicinity of the wear indicator hole and, in a projection view in the tire circumferential direction, at least a portion of the guide recess portion overlapping the wear indicator hole, and another recess portion provided in the vicinity of the wear indicator hole and extending in the tire circumferential direction, wherein the other recess portion being provided at a position that does not overlap the wear indicator hole in a projection view in the tire circumferential direction, and 0.3 ≤ L/K ≤ 1.5 is satisfied, where K is a maximum width of the wear indicator hole and L is a distance between the wear indicator hole and the other recess portion on the surface of the side protector.

Preferably, 0.8 ≤ A/K ≤ 2.4 is satisfied, where K is a maximum width of the wear indicator hole on the surface of the side protector and A is a shortest distance from the wear indicator hole to the guide recess portion on the surface of the side protector.

Preferably, 0.1 ≤ d/D ≤ 0.4 is satisfied for a ratio d/D, where D is a depth of the wear indicator hole from the surface of the side protector and d is a depth of the guide recess portion from the surface of the side protector, and 1.05 ≤ T/D ≤ 1.20 is satisfied for a ratio T/D, where T is a distance from a bottom of the wear indicator hole to the carcass layer.

Preferably, 0.2 ≤ W/K ≤ 0.5 is satisfied, where W is a width of the guide recess portion in a direction orthogonal to the tire circumferential direction on the surface of the side protector and K is a maximum width of the wear indicator hole on the surface of the side protector.

The guide recess portion preferably extends continuously in the tire circumferential direction.

The guide recess portion is provided preferably only in a range from a position of an end portion of the wear indicator hole to a position of 10° in the tire circumferential direction on the surface of the side protector.

Another recess portion provided in the vicinity of the wear indicator hole and extending in the tire circumferential direction is further included, the other recess portion being provided at a position that does not overlap the wear indicator hole in a projection view in the tire circumferential direction, and preferably, 0.3 ≤ L/K ≤ 1.5 is satisfied, where K is a maximum width of the wear indicator hole and L is a distance between the wear indicator hole and the other recess portion on the surface of the side protector.

The side protector is preferably provided between a position of 0.1 SH and a position of 0.6 SH from a tire tread surface with respect to a tire cross-sectional height SH.

Advantageous Effects of Invention

According to an embodiment of the present invention, even when a wear indicator is provided to a pneumatic tire, visibility and cracking resistance of the wear indicator can be improved.

Brief Description of Drawings

FIG. 1 is a meridian cross-sectional view of a pneumatic tire according to an embodiment of the present invention.
FIG. 2 is an enlarged view illustrating a portion of a side protector of FIG. 1.
FIG. 3 is a view of the side protector of FIG. 1 viewed from the direction of an arrow in FIG. 1.
FIG. 4 is a view illustrating another configuration example of a wear indicator hole and a guide recess portion.
FIG. 5 is a view illustrating another configuration example of a wear indicator hole and a guide recess portion.
FIG. 6 is a view illustrating another configuration example of a wear indicator hole and a guide recess portion.
FIG. 7 is a view illustrating a cross-section of A-A in FIG. 4.
FIG. 8 is a view illustrating a cross-section of B-B in FIG. 5.
FIG. 9 is a view explaining the distance between a wear indicator hole and a guide recess portion.
FIG. 10 is a view explaining the distance between a wear indicator hole and a guide recess portion.
FIG. 11 is a view explaining a disposition range in the tire circumferential direction of a wear indicator hole and a guide recess portion.
FIG. 12 is an enlarged view illustrating the vicinity of the wear indicator hole in FIG. 11.
FIG. 13 is a view illustrating a modified example when a side protector is viewed from the direction of the arrow in FIG. 1.
FIG. 14 is a view illustrating a modified example when a side protector is viewed from the direction of the arrow in FIG. 1.
FIG. 15 is a view illustrating a modified example when a side protector is viewed from the direction of the arrow in FIG. 1.
FIG. 16 is a view illustrating a modified example when a side protector is viewed from the direction of the arrow in FIG. 1.
FIG. 17 is a view illustrating a modified example when a side protector is viewed from the direction of the arrow in FIG. 1.

Description of Embodiments

Embodiments of the present invention are described in detail below with reference to the drawings. In the embodiments described below, identical or substantially similar components to those of other embodiments have identical reference signs, and descriptions of those components are either simplified or omitted. The present invention is not limited by the embodiment. Constituents of the embodiments include elements that are essentially identical or that can be substituted or easily conceived by one skilled in the art. Moreover, various omissions, substitutions, and changes to the configurations can be carried out within the scope of the present invention as defined by the claims.

Pneumatic Tire

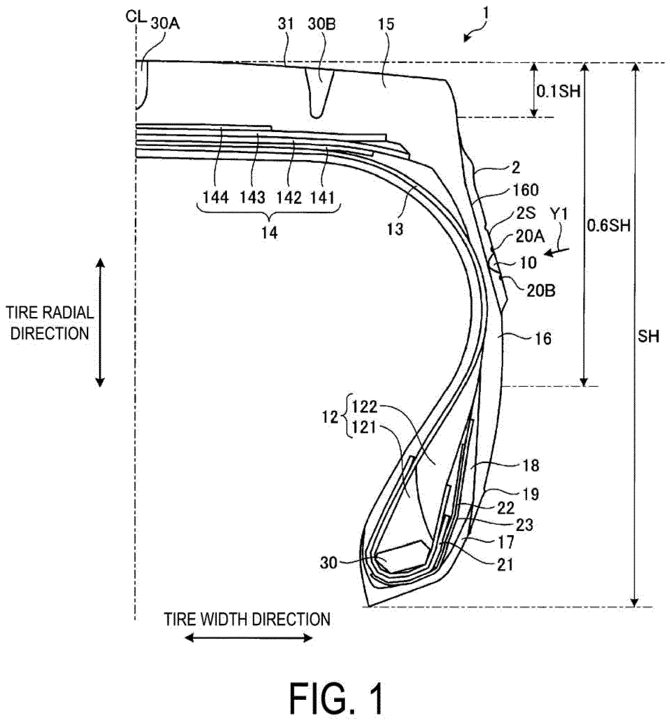

FIG. 1 is a meridian cross-sectional view of a pneumatic tire 1 according to the embodiment of the present invention.

FIG. 1 illustrates the right half of the meridian cross-section of the pneumatic tire 1 with a tire equatorial plane CL as a plane of symmetry, and illustration of the left half thereof is omitted. The left half of the meridian cross-section of the pneumatic tire 1 with the tire equatorial plane CL as a plane of symmetry may have a structure symmetrical to the above-described right half. FIG. 1 illustrates a heavy duty radial tire that is mounted on trucks, buses, and the like for long-distance transport as an example of a pneumatic tire.

In FIG. 1, "cross section in a tire meridian direction" refers to a cross section of the tire taken along a plane that includes a tire rotation axis (not illustrated). Reference sign CL denotes the tire equatorial plane and refers to a plane normal to the tire rotation axis that passes through the center point of the tire in the tire rotation axis direction. "Tire width direction" refers to the direction parallel with the tire rotation axis. "Tire radial direction" refers to the direction perpendicular to the tire rotation axis.

In FIG. 1, the pneumatic tire 1 has an annular structure with the tire rotation axis as its center and includes a pair of bead cores 30, a pair of bead fillers 12, a carcass layer 13, a belt layer 14, a tread rubber 15, a pair of sidewall rubbers 16, a pair of rim cushion rubbers 17, and a pair of shock absorbing rubbers 18. The pair of sidewall rubbers 16 includes a rim check line 19 at the bottom.

The sidewall rubber 16 forms a sidewall portion, the sidewall portion rising from a side profile 160 of the pneumatic tire 1 to the tire outer side and including a side protector 2 extending in the tire circumferential direction. The side protector 2 is provided between, with respect to a tire cross-sectional height SH, a position of 0.1 SH and a position of 0.6 SH from a tire tread surface side. That is, the side protector 2 is provided on a buttress portion.

The side profile 160 is an imaginary line that is an arc having a radius of curvature of not less than 1.1 times and not greater than 1.2 times the carcass line, in a range from the maximum total width position of the pneumatic tire 1 to the buttress portion.

The side protector 2 has, on its surface, a wear indicator hole 10. The wear indicator hole 10 extends from the surface of the side protector 2 to the tire inner side. The side protector 2 is worn by being rubbed against curbs of roads. As a result, the wear indicator hole 10 serves as an indication of wear of the side protector 2. Note that the side protector 2 includes recess portions 20A and 20B in the vicinity of the wear indicator hole 10. The recess portions 20A and 20B have recessed shapes extending from a surface 2S of the side protector 2 to the tire inner side. The recess portions 20A and 20B may be continuous in the tire circumferential direction, unlike a guide recess portion described below.

The pair of bead cores 30 is an annular member composed of a plurality of bead wires bundled together. The pair of bead cores 30 constitutes cores of the left and right bead portions. The pair of bead fillers 12 is formed from a lower filler 121 and an upper filler 122. The pair of bead fillers 12 is disposed outward of the pair of bead cores 30 in the tire radial direction and constitutes the bead portions.

The carcass layer 13 extends between the left and right bead cores 30 in a toroidal shape, forming the framework of the tire. Additionally, both end portions of the carcass layer 13 are turned back from the inner side in the tire width direction to the outer side in the tire width direction, wrapping around the bead cores 30 and the bead fillers 12, and fixed thereto. Also, the carcass layer 13 is made by performing a rolling process on coating rubber-covered carcass cords made of steel or an organic fiber material (for example, nylon, polyester, rayon, or the like). The carcass layer 13 has a carcass angle (inclination angle of the fiber direction of the carcass cords with respect to the tire circumferential direction), as an absolute value, ranging from 85 degrees to 95 degrees. Note that, in the configuration in FIG. 1, the carcass layer 13 has a single layer structure made of a single carcass ply; however, no such limitation is intended, and the carcass layer 13 may have a multilayer structure made by layering a plurality of carcass plies.

The belt layer 14 is a multilayer structure including a plurality of belt plies 141 to 144, and is disposed by being wound around the outer circumference of the carcass layer 13. These belt plies 141 to 144 include, for example, a large-angle belt 141, a pair of cross belts 142 and 143, and a belt cover 144. Each of the belt plies 141 to 144 is made by performing a rolling process on coating rubber-covered a plurality of belt cords made of steel or an organic fiber material. Each of the belt plies 141 to 144 has a predetermined belt angle (inclination angle of the longitudinal direction of the plurality of belt cords with respect to the tire circumferential direction).

The tread rubber 15 is disposed outward of the carcass layer 13 and the belt layer 14 in the tire radial direction, and forms a tread portion 31 of the tire. The tread portion 31 includes main grooves 30A and 30B.

The pair of sidewall rubbers 16 is disposed on the outer side in the tire width direction of the carcass layer 13 and constitute left and right sidewall portions. The pair of rim cushion rubbers 17 is disposed on the left and right bead cores 30 and the inner side in the tire radial direction of the turned back portion of the carcass layer 13. The pair of rim cushion rubbers 17 constitutes the contact surfaces of the left and right bead portions with respect to a rim flange. Note that the pneumatic tire 1 includes a chafer 21 and a sub-chafers 22 and 23.

Note that, the cross-sectional height SH is one-half of a difference between a tire outer diameter and a rim diameter, when the pneumatic tire 1 is mounted on a specified rim, inflated to a specified internal pressure, and in an unloaded state. "Specified rim" refers to a "standard rim" defined by JATMA, a "Design Rim" defined by TRA, or a "Measuring Rim" defined by ETRTO. Additionally, "specified internal pressure" refers to a "maximum air pressure" defined by JATMA, to the maximum value in "TIRE LOAD LIMITS AT VARIOUS COLD INFLATION PRESSURES" defined by TRA, or to "INFLATION PRESSURES" defined by ETRTO.

Wear Indicator Hole

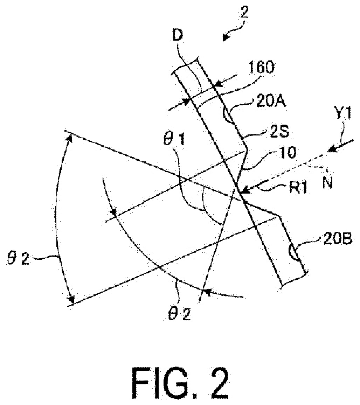

FIG. 2 is an enlarged view illustrating a portion of the side protector 2 of FIG. 1. The direction of an arrow Y1 illustrated in FIG. 2 is along a normal line N to the surface 2S of the side protector 2. As illustrated in FIG. 2, the wear indicator hole 10 extends from the surface 2S of the side protector 2 to the direction of the arrow Y1, i.e., the tire inner side. It can be seen that the wear indicator hole 10 has a recessed shape extending from the side protector 2 to the tire inner side, with reference to the boundary with the surface 2S. The depth of the recess portions 20A and 20B are shallower than a depth D of the wear indicator hole 10 in the direction toward the tire inner side. It can be seen that the recess portions 20A and 20B also have recessed shapes extending from the side protector 2 to the tire inner side, with reference to the boundary with the surface 2S. The depth D of the wear indicator hole 10 in the direction toward the tire inner side is preferably equal to the distance from the surface 2S of the side protector 2 to the side profile 160. In this way, by the disappearance of the wear indicator hole 10, the driver and the like perceives that the wear threshold has been reached.

In FIG. 2, an angle $\theta1$ between the walls of the wear indicator hole 10 is 90°, for example. An angle $\theta2$ of the wall of the wear indicator hole 10 with respect to the normal line N to the surface 2S of the side protector 2 is 45°, for example. The bottom portion of the wear indicator hole 10 is an arc and a radius R1 of the arc is 2.4 mm, for example.

Disposition of the Wear Indicator Hole and the Guide Recess Portion

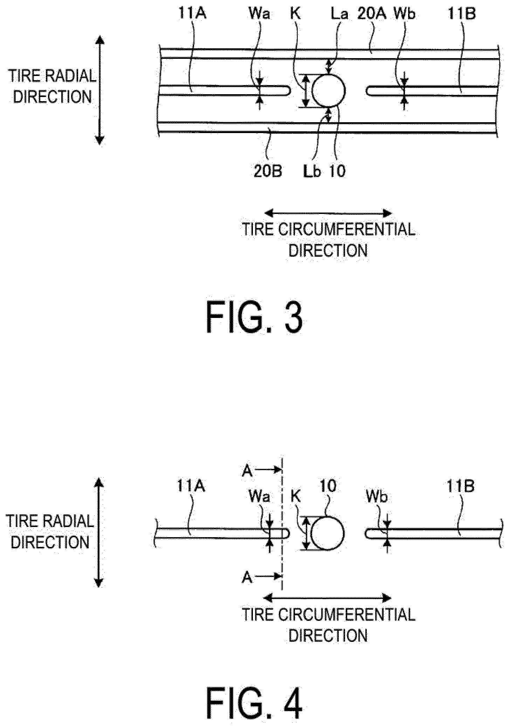

FIG. 3 is a view when the side protector 2 of FIG. 1 is viewed from the direction of the arrow Y1 in FIG. 1. The direction of the arrow Y1 is a direction along the normal line to the surface of the side protector 2. In FIG. 3, although the arrow indicating the tire circumferential direction is linear for the convenience of the drawing, in practice the arrow is a portion of an arc. The same applies to the other views in which the side protector 2 of FIG. 1 is viewed from the direction of the arrow Y1 in FIG. 1.

As illustrated in FIG. 3, the recess portions 20A and 20B are provided at positions separated from the wear indicator hole 10 in the tire radial direction. A guide recess portion 11 (11A and 11B) is provided at a position separated from the wear indicator hole 10 in the tire circumferential direction. The guide recess portions 11A and 11B are provided to extend in the tire circumferential direction. Note that "extend in the tire circumferential direction" includes both the case of extending continuously in the tire circumferential direction and the case of being arranged intermittently in the tire circumferential direction. The guide recess portion 11 extends continuously in the tire circumferential direction, so that the guide recess portion 11 can be easily found, and by searching in the tire circumferential direction along the guide recess portion 11, the wear indicator hole 10 can be easily found.

As illustrated in FIG. 3, the wear indicator hole 10 and each of the guide recess portions 11A and 11B are not continuous. The guide recess portion 11A is continuous in the tire circumferential direction but terminates in the vicinity of the wear indicator hole 10. The guide recess portion 11B is continuous in the tire circumferential direction but terminates in the vicinity of the wear indicator hole 10. In a case where the wear indicator hole 10 and each of the guide recess portions 11A and 11B are continuous, the stress concentrated on the wear indicator hole 10 cannot be effectively distributed. In contrast, the guide recess portions 11A and 11B terminate in the vicinity of the wear indicator hole 10, and the recess portions and the wear indicator are separated, so that the stress concentrated on the wear indicator hole 10 can be distributed.

In FIG. 3, when the guide recess portion 11A or 11B can be found, by searching in the tire circumferential direction along the guide recess portion 11A or 11B, the wear indicator hole 10 can be easily found. Note that, in a case where the wear indicator hole 10 is provided at every predetermined angle (for example, every 90°) in the tire circumferential direction, the guide recess portion 11 is preferably provided for each of the wear indicator holes 10.

In FIG. 3, the wear indicator hole 10 of the present example is circular when viewed in a direction toward the tire inner side (the direction from the front side toward the back side in FIG. 3). Formula (1) is preferably satisfied for a ratio W/K, where K is the maximum width of the wear indicator hole 10 and W (Wa and Wb) is the width of the guide recess portions 11A and 11B in the direction orthogonal to the tire circumferential direction.

$$0.2 \leq W/K \leq 0.5 \cdots (1)$$

More preferably, $0.3 \leq W/K \leq 0.4$ is satisfied.

The relationship between the maximum width K of the wear indicator hole 10 and the width W (Wa and Wb) of the guide recess portions 11A and 11B has an optimal value. In a case where the width W (Wa and Wb) of the guide recess portions 11A and 11B are too small with respect to the maximum width K of the wear indicator hole 10, the effect of alleviating the stress in the vicinity of the wear indicator hole 10 is not obtained, which is not preferable. In a case where the width W (Wa and Wb) of the recess portions is too large with respect to the maximum width K of the wear indicator hole 10, the stress shared by the guide recess portions 11A and 11B increases, so cracks may be generated in the guide recess portions 11A and 11B, which is not preferable.

Furthermore, preferably, Formula (2) in FIG. 3 is satisfied for a ratio L/K of a distance L with respect to the maximum width K of the wear indicator hole 10, where L (La and Lb) is the shortest distance from the other recess portions 20A and 20B other than the guide recess portions.

$$0.3 \leq L/K \leq 1.5 \cdots (2)$$

The relationship between the maximum width K of the wear indicator hole 10 and the distance L from the other recess portions 20A and 20B other than the guide recess portions has an optimal value. In a case where the distance L is too close with respect to the maximum width K of the wear indicator hole 10, the rigidity between the wear indicator hole 10 and the other recess portions declines, so cracks are easily generated, which is not preferable. In a case where the distance L is too far with respect to the maximum width K of the wear indicator hole 10, the effect of sufficiently dispersing the stress cannot be obtained, which is not preferable.

FIG. 4 is a view illustrating another configuration example of the wear indicator hole 10 and the guide recess portion 11 (11A and 11B). The guide recess portions 11A and 11B are provided at positions separated from the wear indicator hole 10 in the tire circumferential direction. Unlike the configuration illustrated in FIG. 3, the other recess portions 20A and 20B are not provided. Also in the present example, the Formula (1) is preferably satisfied for the ratio W/K, where K is the maximum width of the wear indicator hole 10 and W (Wa and Wb) is the width of the guide recess portions 11A and 11B in the direction orthogonal to the tire circumferential direction. More preferably, $0.3 \leq W/K \leq 0.4$ is satisfied.

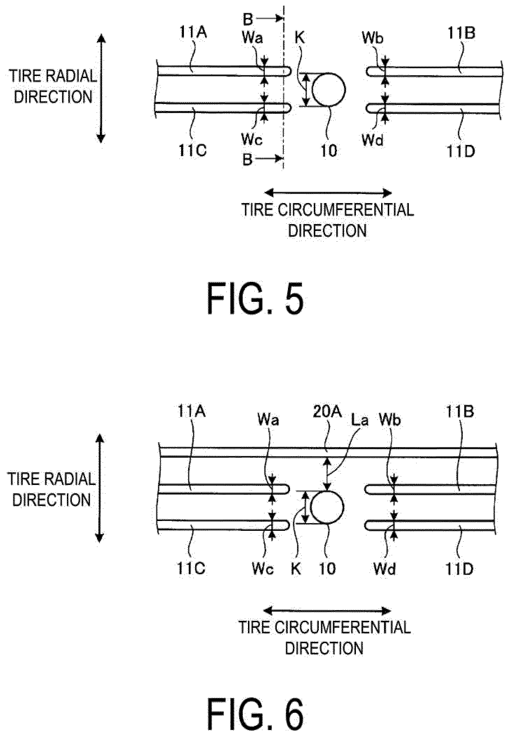

FIG. 5 is a view illustrating another configuration example of the wear indicator hole 10 and the guide recess portion 11 (11A, 11B, 11C, and 11D). The guide recess portions 11A, 11B, 11C, and 11D are provided at positions separated from the wear indicator hole 10 in the tire circumferential direction. Unlike the configuration illustrated in FIG. 3, the other recess portions 20A and 20B are not provided. Also in the present example, the Formula (1) is preferably satisfied for the ratio W/K, where K is the maximum width of the wear indicator hole 10 and W (Wa, Wb, Wc, and Wd) is the width of the guide recess portions 11A, 11B, 11C, and 11D in the direction orthogonal to the tire circumferential direction. More preferably, $0.3 \leq W/K \leq 0.4$ is satisfied.

FIG. 6 is a view illustrating another configuration example of the wear indicator hole 10 and the guide recess portion 11 (11A, 11B, 11C, and 11D). The guide recess portions 11A, 11B, 11C, and 11D are provided at positions separated from the wear indicator hole 10 in the tire circumferential direction. Unlike the configuration illustrated in FIG. 5, the other recess portion 20A is provided at a position separated from the wear indicator hole 10 in the tire radial direction.

Also in the present example, the Formula (1) is preferably satisfied for the ratio W/K, where K is the maximum width of the wear indicator hole 10 and W (Wa, Wb, Wc, and Wd) is the width of the guide recess portions 11A, 11B, 11C, and 11D in the direction orthogonal to the tire circumferential direction. More preferably, $0.3 \leq W/K \leq 0.4$ is satisfied. Furthermore, the Formula (2) is preferably satisfied for the ratio L/K of the distance L with respect to the maximum width K of the wear indicator hole 10, where L (La) is the shortest distance from the other recess portion 20A in FIG. 6.

Depths of the Wear Indicator Hole and the Guide Recess Portion

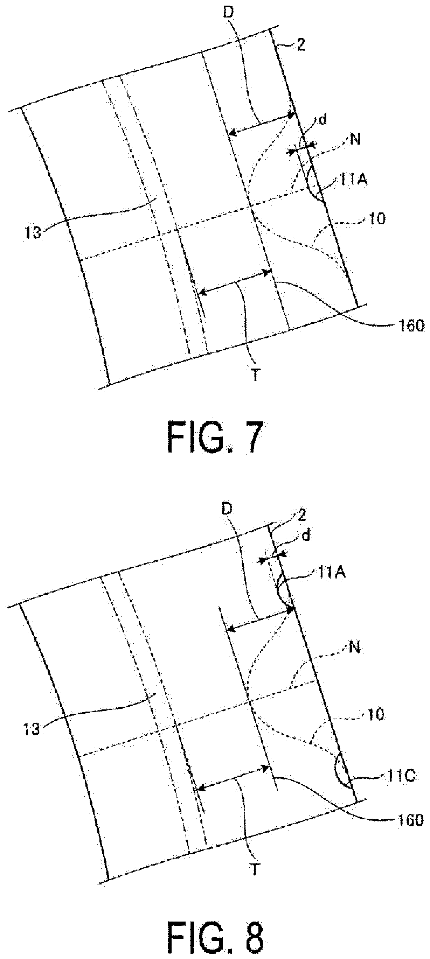

FIG. 7 is a view illustrating a cross-section of A-A in FIG. 4. As illustrated in FIG. 7, the depth D of the wear indicator hole 10 from the surface of the side protector 2 is greater than a depth d of the guide recess portion 11A from the surface of the side protector 2. As can be seen with reference to FIGS. 4 and 7, in a projection view in the tire circumferential direction, the guide recess portion 11A overlaps the wear indicator hole 10.

In FIG. 7, Formula (3) is preferably satisfied for a ratio d/D where D is a depth of the wear indicator hole 10 in the direction toward the tire inner side and d is a depth of the guide recess portion 11A in the direction toward the tire inner side.

$$0.1 \leq d/D \leq 0.4 \cdots (3)$$

Furthermore, Formula (4) is preferably satisfied for a ratio T/D, where T is the distance from the bottom of the wear indicator hole 10 to the carcass layer 13.

$$1.05 \leq T/D \leq 1.20 \cdots (4)$$

FIG. 8 is a view illustrating a cross-section of B-B in FIG. 5. As illustrated in FIG. 8, the depth D of the wear indicator hole 10 from the surface of the side protector 2 is greater than the depth d of the guide recess portions 11A and 11C from the surface of the side protector 2. As can be seen with reference to FIGS. 5 and 8, in a projection view in the tire circumferential direction, a portion of the guide recess portion 11A overlaps the wear indicator hole 10. Also in a projection view in the tire circumferential direction, a portion of the guide recess portion 11C overlaps the wear indicator hole 10.

In FIG. 8, the Formula (3) is preferably satisfied for the ratio d/D, where D is a depth of the wear indicator hole 10 in the direction toward the tire inner side and d is a depth of the guide recess portions 11A and 11C in the direction toward the tire inner side. Furthermore, the Formula (4) is preferably satisfied for the ratio T/D, where T is the distance from the bottom of the wear indicator hole 10 to the carcass layer 13.

In FIGS. 7 and 8, the relationship between the depth D of the wear indicator hole 10 and the depth d of the guide recess portions 11A and 11C has an optimal value. In a case where the depth d of the guide recess portions 11A and 11C is too great (too deep) with respect to the depth D of the wear indicator hole 10, the stress shared by the guide recess portions 11A and 11C increases, so cracks may be generated in the guide recess portions 11A and 11C, which is not preferable. In a case where the depth d of the guide recess portions 11A and 11C is too small (too shallow) with respect to the depth D of the wear indicator hole 10, the stress cannot be dispersed, so cracks may be generated in the wear indicator hole 10, which is not preferable. In a case where the ratio T/D is smaller than 1.05, the stress cannot be dispersed, so cracks may be generated in the wear indicator hole 10, which is not preferable. In a case where the ratio T/D is greater than 1.20, the heat build-up in the side portion increases, which is not preferable. The same applies to the guide recess portions 11B and 11D in FIGS. 5 and 6.

Distance between the Wear Indicator Hole and the Guide Recess Portion

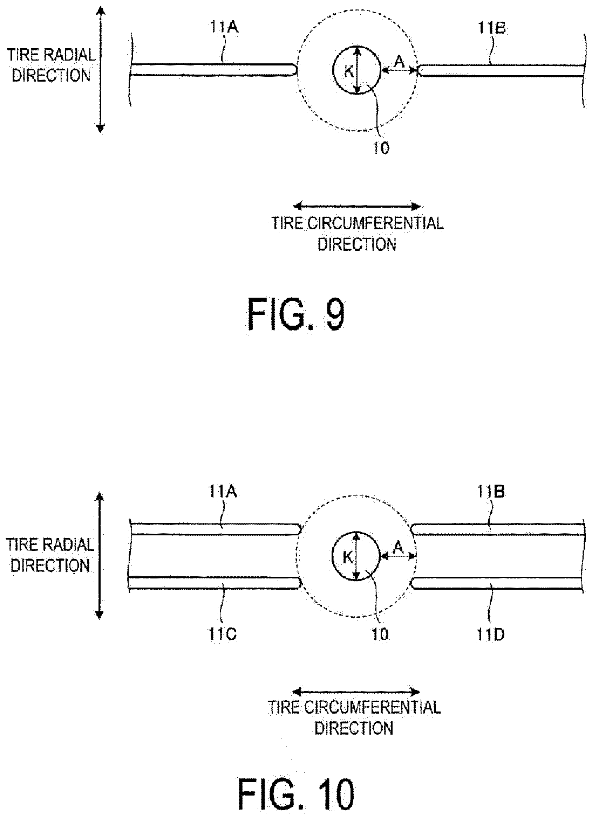

FIGS. 9 and 10 are views explaining the distance between the wear indicator hole 10 and the guide recess portions 11A and 11B. Also in FIG. 9, in a projection view in the tire circumferential direction, the guide recess portions 11A and 11B overlap the wear indicator hole 10. In FIG. 9, Formula (5) is preferably satisfied for a ratio A/K, where K is the maximum width of the wear indicator hole 10 on the surface of the side protector 2 and A is the shortest distance from the wear indicator hole 10 to the guide recess portions 11A and 11B on the surface of the side protector 2.

$$0.8 \leq A/K \leq 2.4 \cdots (5)$$

More preferably, $1.0 \leq A/K \leq 1.7$ is satisfied. The range of the vicinity of the wear indicator hole 10 can be defined by the shortest distance A.

Also in FIG. 10, in a projection view in the tire circumferential direction, at least a portion of each of the guide recess portions 11A, 11B, 11C, and 11D overlaps the wear indicator hole 10. In FIG. 10, the Formula (5) is preferably satisfied for the ratio A/K, where K is the maximum width of the wear indicator hole 10 on the surface of the side protector 2 and A is the shortest distance from the wear indicator hole 10 to the guide recess portions 11A, 11B, 11C, and 11D on the surface of the side protector 2. More preferably, $1.0 \leq A/K \leq 1.7$ is satisfied. The range of the vicinity of the wear indicator hole 10 can be defined by the shortest distance A.

The distance A between the maximum width K of the wear indicator hole 10 and the guide recess portions 11A, 11B, 11C, and 11D has an optimal value. In a case where the distance A is short, the wear indicator hole 10 and the guide recess portions 11A, 11B, 11C, and 11D are too close to each other, so the rigidity of the rubber in the region between the wear indicator hole 10 and the guide recess portions 11A, 11B, 11C, and 11D decreases, which may be the starting point of cracks, which is not preferable. In a case where the distance A is long, the wear indicator hole 10 and the guide recess portions 11A, 11B, 11C, and 11D are too far from each other, so the effect of alleviating the difference in rigidity between the wear indicator hole 10 and the guide recess portions 11A, 11B, 11C, and 11D cannot be obtained, and the stress may concentrate on the wear indicator hole 10 to generate cracks, which is not preferable.

Disposition Range in the Tire Circumferential Direction

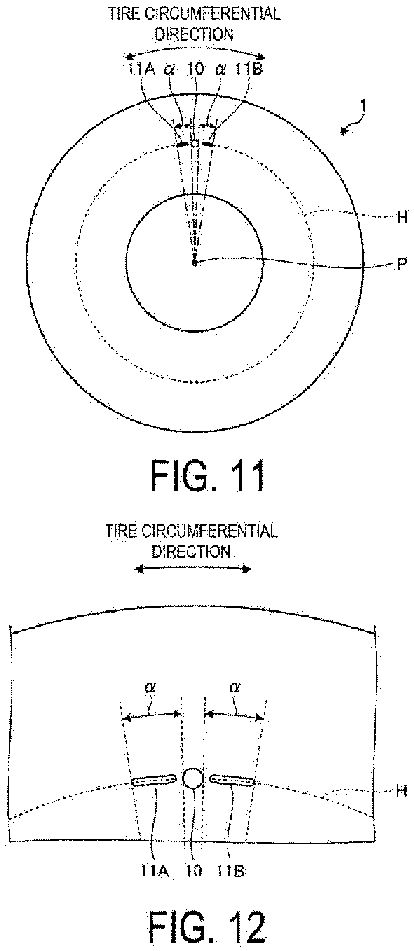

FIG. 11 is a view explaining a disposition range in the tire circumferential direction of the wear indicator hole 10 and the guide recess portions 11A and 11B. FIG. 12 is an enlarged view illustrating the vicinity of the wear indicator hole 10 in FIG. 11. Also in FIGS. 11 and 12, in a projection view in the tire circumferential direction, the guide recess portions 11A and 11B overlap the wear indicator hole 10.

As illustrated in FIG. 11, on the surface of the side protector, the guide recess portions 11A and 11B are provided only in a range from a position of the end portion of the wear indicator hole 10 to a position of an angle $\alpha$ in the tire circumferential direction. The angle $\alpha$ is around the center of rotation point P of the pneumatic tire 1. The angle $\alpha$ is preferably 10°, for example. However, as illustrated in FIG. 12, the guide recess portions 11A and 11B terminate in the vicinity of the wear indicator hole 10. The wear indicator hole 10 and each of the guide recess portions 11A and 11B are not continuous. The guide recess portions 11A and 11B terminate in the vicinity of the wear indicator hole 10, so that visibility during appearance inspection can be improved, and the difference in rigidity generated due to the provision of the wear indicator hole 10 can be alleviated to improve cracking resistance.

The guide recess portions 11A and 11B may be continuous in the tire circumferential direction along a dashed line H illustrated in FIGS. 11 and 12, without being limited to the range from the end portion of the wear indicator hole 10 to the position of the angle $\alpha$. Note that, in a case where the angle $\alpha$ is 20°, cracking resistance is further improved.

Rubber Material

In FIG. 1, the rubber constituting the side protector 2 may be an identical material to the rubber on the tire inner side than the side profile 160, or may be a different material. In a case of a different material, for example, a material in which cracks are unlikely to be generated is preferable. That is, the rubber constituting the side protector 2 is rubber having a greater elongation at break compared to the rubber on the tire inner side than the side profile 160.

Modified Examples

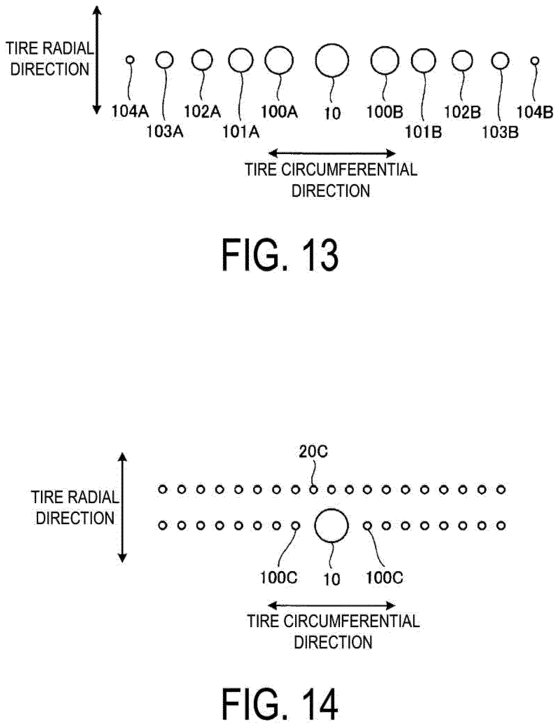

Modified examples are conceivable for the size and arrangement of the guide recess portions. FIGS. 13 to 17 are views illustrating examples of the size and arrangement of guide recess portions. FIGS. 13 to 17 are views illustrating modified examples when the side protector 2 is viewed from the direction of the arrow Y1 in FIG. 1.

In the example illustrated in FIG. 13, circular guide recess portions 100A and 100B are provided on both sides of the wear indicator hole 10 in the tire circumferential direction. Also in FIG. 13, in a projection view in the tire circumferential direction, at least a portion of each of the guide recess portions 100A and 100B overlaps the wear indicator hole 10.

Further, from the position of the guide recess portion 100A, guide recess portions 101A, 102A, 103A, and 104A are provided in this order in a direction opposite to the wear indicator hole 10. Further, from the position of the guide recess portion 100B, guide recess portions 101B, 102B, 103B, and 104B are provided in this order in a direction opposite to the wear indicator hole 10. With such an arrangement of the guide recess portions, by searching in the tire circumferential direction along the guide recess portions, the wear indicator hole 10 can be easily found.

Furthermore, in the present example, the diameters of the guide recess portions change so that the diameters of the guide recess portions increase as approaching the position of the wear indicator hole 10. Thus, by searching in the tire circumferential direction along the guide recess portions, the wear indicator hole 10 can be easily found.

The guide recess portions 100A and 100B terminate in the vicinity of the wear indicator hole 10. The wear indicator hole 10 and each of the guide recess portions 100A and 100B are not continuous. The guide recess portions 100A and 100B terminate in the vicinity of the wear indicator hole 10, so that visibility during appearance inspection can be improved, and the difference in rigidity generated due to the provision of the wear indicator hole 10 can be alleviated to improve cracking resistance.

In the example illustrated in FIG. 14, a plurality of guide recess portions 100C having a diameter smaller than the diameter of the wear indicator hole 10 are provided on both sides of the wear indicator hole 10 in the tire circumferential direction. Also in FIG. 14, in a projection view in the tire circumferential direction, at least a portion of each of the plurality of guide recess portions 100C overlaps the wear indicator hole 10. With such an arrangement of the guide recess portions, by searching in the tire circumferential direction along the plurality of guide recess portions 100C, the wear indicator hole 10 can be easily found.

Furthermore, in the present example, a plurality of recess portions 20C is provided along the tire circumferential direction at a position separated from the wear indicator hole 10 and the plurality of guide recess portions 100C in the tire radial direction. Thus, by comparing the arrangement of the plurality of recess portions 20C with the arrangement of the wear indicator hole 10 and the plurality of guide recess portions 100C, the wear indicator hole 10 can be easily found.

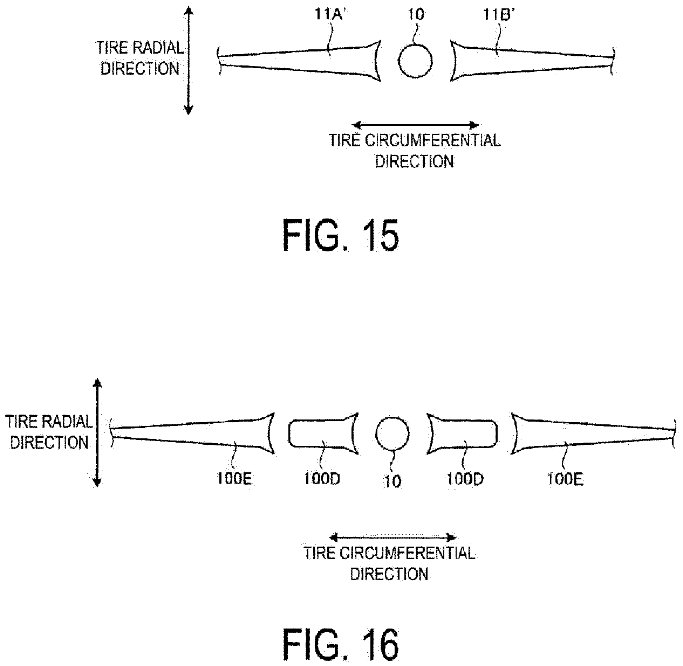

In the example illustrated in FIG. 15, guide recess portions 11A' and 11B' are provided along the tire circumferential direction on both sides of the wear indicator hole 10 in the tire circumferential direction. Also in FIG. 15, in a projection view in the tire circumferential direction, at least a portion of each of the guide recess portions 11A' and 11B' overlaps the wear indicator hole 10. The widths in the tire radial direction of the guide recess portions 11A' and 11B' change so that the widths of the guide recess portions increase as approaching the position of the wear indicator hole 10. Thus, by searching in the tire circumferential direction along the guide recess portions 11A' and 11B', the wear indicator hole 10 can be easily found.

Furthermore, in the present example, the shapes of the end portions on the side closer to the wear indicator hole 10 of the guide recess portions 11A' and 11B' are arcuate, so that by searching in the tire circumferential direction along the guide recess portions 11A' and 11B', the wear indicator hole 10 can be easily found.

In the example illustrated in FIG. 16, guide recess portions 100D and 100D are provided along the tire circumferential direction on both sides of the wear indicator hole 10 in the tire circumferential direction. Also in FIG. 16, in a projection view in the tire circumferential direction, at least a portion of each of the guide recess portions 100D and 100D overlaps the wear indicator hole 10. Further, guide recess portions 100E and 100E are provided in directions opposite to the wear indicator hole 10 from positions of the guide recess portions 100D and 100D. With such an arrangement of the guide recess portions, by searching in the tire circumferential direction along the guide recess portions, the wear indicator hole 10 can be easily found.

Furthermore, in the present example, the shapes of the end portions of the guide recess portions 100D and 100E on the side closer to the wear indicator hole 10 are arcuate. The width in the tire radial direction of the guide recess portions 100E changes so that the width of the guide recess portions increases as approaching the position of the wear indicator hole 10. Thus, by searching in the tire circumferential direction along the guide recess portions 100D and 100E, the wear indicator hole 10 can be easily found.

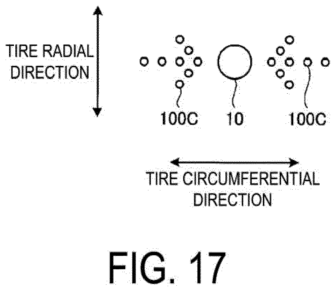

In the example illustrated in FIG. 17, the plurality of guide recess portions 100C having a diameter smaller than the diameter of the wear indicator hole 10 is provided on both sides of the wear indicator hole 10 in the tire circumferential direction. Also in FIG. 17, in a projection view in the tire circumferential direction, at least a portion of the plurality of guide recess portions 100C overlaps the wear indicator hole 10.

In the example illustrated in FIG. 17, the plurality of guide recess portions 100C are disposed along the shape of an arrow pointing toward the position of the wear indicator hole 10. With such an arrangement of the plurality of guide recess portions, by searching in the tire circumferential direction along the guide recess portion, the wear indicator hole 10 can be easily found.

Note that the above description describes a case in which the wear indicator hole 10 is circular when viewed in a direction toward the tire inner side, but the wear indicator hole 10 may have other patterns such as elliptical or the like.

Examples

In the examples, performance tests for visibility and cracking resistance are performed on a plurality of types of pneumatic tires of different conditions (see Tables 1 to 3). In the performance tests, a pneumatic tire having a European bus size of 275/70R22.5 is assembled on a specified rim and inflated to a specified air pressure.

In the evaluation of visibility, the wear indicator sections are visually confirmed from the tire appearance, the time required for confirmation is measured five times, and the average value of the five times is indexed. In the evaluation, larger index values indicate shorter required time for confirmation and superior visibility.

In the evaluation of cracking resistance, the pneumatic tire is scraped 300 times onto a curb, and the number of cracks generated in the side protector is indexed. In the evaluation, larger index values indicate a smaller number of cracks and superior cracking resistance.

The pneumatic tire of the Conventional Example in Table 1 includes a wear indicator, but does not include a guide recess portion. The pneumatic tire of the Comparative Example in Table 1 includes a wear indicator and a guide recess portion, but in the tire, the guide recess portion does not terminate in the vicinity of the wear indicator but terminates at a separated position.

As can be seen from the test results of Tables 1 to 3, the pneumatic tires of each of the Examples have superior visibility and cracking resistance.

[Table 1-1]

| | Conventional Example | Comparative Example | Example 1 | Example 2 | Example 3 |
|---|---|---|---|---|---|
| Presence of wear indicator | Yes | Yes | Yes | Yes | Yes |
| Presence of guide recess portion | No | Yes | Yes | Yes | Yes |
| Guide recess portion terminating in the vicinity | - | No | Yes | Yes | Yes |
| Ratio A/K | - | - | 0.8 | 1.0 | 1.5 |
| Ratio d/D | - | - | 0.5 | 0.5 | 0.5 |
| Ratio T/D | - | - | 1.00 | 1.00 | 1.00 |
| Ratio W/K | - | - | 0.6 | 0.6 | 0.6 |
| Guide recess portion being continuous/ discontinuous | - | - | Continuous | Continuous | Continuous |
| Placement angle range from the wear indicator end portion | - | - | 3 | 3 | 3 |
| Ratio L/K | - | - | 0.2 | 0.2 | 0.2 |
| Visibility (index value) | 100 | 110 | 111 | 112 | 112 |
| Cracking resistance (index value) | 100 | 105 | 105 | 106 | 108 |

[Table 1-2]

| | Example 4 | Example 5 | Example 6 | Example 7 | Example 8 | Example 9 |
|---|---|---|---|---|---|---|
| Presence of wear indicator | Yes | Yes | Yes | Yes | Yes | Yes |
| Presence of guide recess portion | Yes | Yes | Yes | Yes | Yes | Yes |
| Guide recess portion terminating in the vicinity | Yes | Yes | Yes | Yes | Yes | Yes |
| Ratio A/K | 1.7 | 2.4 | 1.5 | 1.5 | 1.5 | 1.5 |
| Ratio d/D | 0.5 | 0.5 | 0.5 | 0.1 | 0.3 | 0.4 |
| Ratio T/D | 1.00 | 1.00 | 1.00 | 1.00 | 1.00 | 1.00 |
| Ratio W/K | 0.6 | 0.6 | 0.6 | 0.6 | 0.6 | 0.6 |
| Guide recess portion being continuous/ discontinuous | Continuous | Continuous | Continuous | Continuous | Continuous | Continuous |
| Placement angle range from the wear indicator end portion | 3 | 3 | 3 | 3 | 3 | 3 |
| Ratio L/K | 0.2 | 0.2 | 0.2 | 0.2 | 0.2 | 0.2 |
| Visibility (index value) | 111 | 110 | 112 | 112 | 114 | 115 |
| Cracking resistance (index value) | 108 | 108 | 108 | 112 | 110 | 108 |

[Table 2-1]

|  | Example 10 | Example 11 | Example 12 | Example 13 | Example 14 | Example 15 |
|---|---|---|---|---|---|---|
| Presence of wear indicator | Yes | Yes | Yes | Yes | Yes | Yes |
| Presence of guide recess portion | Yes | Yes | Yes | Yes | Yes | Yes |
| Guide recess portion terminating in the vicinity | Yes | Yes | Yes | Yes | Yes | Yes |
| Ratio A/K | 1.5 | 1.5 | 1.5 | 1.5 | 1.5 | 1.5 |
| Ratio d/D | 0.3 | 0.3 | 0.3 | 0.3 | 0.3 | 0.3 |
| Ratio T/D | 1.05 | 1.10 | 1.20 | 1.10 | 1.10 | 1.10 |
| Ratio W/K | 0.6 | 0.6 | 0.6 | 0.2 | 0.3 | 0.4 |
| Guide recess portion being continuous/ discontinuous | Continuous | Continuous | Continuous | Continuous | Continuous | Continuous |
| Placement angle range from the wear indicator end portion | 3 | 3 | 3 | 3 | 3 | 3 |
| Ratio L/K | 0.2 | 0.2 | 0.2 | 0.2 | 0.2 | 0.2 |
| Visibility (index value) | 114 | 114 | 113 | 114 | 115 | 116 |
| Cracking resistance (index value) | 112 | 113 | 114 | 115 | 115 | 114 |

[Table 2-2]

|  | Example 16 | Example 17 | Example 18 | Example 19 | Example 20 |
|---|---|---|---|---|---|
| Presence of wear indicator | Yes | Yes | Yes | Yes | Yes |
| Presence of guide recess portion | Yes | Yes | Yes | Yes | Yes |
| Guide recess portion terminating in the vicinity | Yes | Yes | Yes | Yes | Yes |
| Ratio A/K | 1.5 | 1.5 | 1.5 | 1.5 | 1.5 |
| Ratio d/D | 0.3 | 0.3 | 0.3 | 0.3 | 0.3 |
| Ratio T/D | 1.10 | 1.10 | 1.10 | 1.10 | 1.10 |
| Ratio W/K | 0.5 | 0.3 | 0.3 | 0.3 | 0.3 |
| Guide recess portion being continuous/ discontinuous | Continuous | Discontinuous | Continuous | Continuous | Continuous |
| Placement angle range from the wear indicator end portion | 3 | 3 | 5 | 10 | 15 |
| Ratio L/K | 0.2 | 0.2 | 0.2 | 0.2 | 0.2 |
| Visibility (index value) | 117 | 116 | 116 | 117 | 117 |
| Cracking resistance (index value) | 113 | 117 | 117 | 119 | 119 |

[Table 3-1]

| | Example 21 | Example | 22 Example | 23 Example | 24 Example 25 |
|---|---|---|---|---|---|
| Presence of wear indicator | Yes | Yes | Yes | Yes | Yes |
| Presence of guide recess portion | Yes | Yes | Yes | Yes | Yes |
| Guide recess portion terminating in the vicinity | Yes | Yes | Yes | Yes | Yes |
| Ratio A/K | 1.5 | 1.5 | 1.5 | 1.5 | 1.5 |
| Ratio d/D | 0.3 | 0.3 | 0.3 | 0.3 | 0.3 |
| Ratio T/D | 1.10 | 1.10 | 1.10 | 1.10 | 1.10 |
| Ratio W/K | 0.3 | 0.3 | 0.3 | 0.3 | 0.3 |
| Guide recess portion being continuous/discontinuous | Continuous | Continuous | Continuous | Continuous | Continuous |
| Placement angle range from the wear indicator end portion | 20 | 25 | 90 | 180 | 270 |
| Ratio UK | 0.2 | 0.2 | 0.2 | 0.2 | 0.2 |
| Visibility (index value) | 118 | 119 | 118 | 118 | 117 |
| Cracking resistance (index value) | 118 | 118 | 117 | 116 | 116 |

[Table 3-2]

| | Example 26 | Example | 27 Example 28 | Example | 29 Example 30 |
|---|---|---|---|---|---|
| Presence of wear indicator | Yes | Yes | Yes | Yes | Yes |
| Presence of guide recess portion | Yes | Yes | Yes | Yes | Yes |
| Guide recess portion terminating in the vicinity | Yes | Yes | Yes | Yes | Yes |
| Ratio A/K | 1.5 | 1.5 | 1.5 | 1.5 | 1.5 |
| Ratio d/D | 0.3 | 0.3 | 0.3 | 0.3 | 0.3 |
| Ratio T/D | 1.10 | 1.10 | 1.10 | 1.10 | 1.10 |
| Ratio W/K | 0.3 | 0.3 | 0.3 | 0.3 | 0.3 |
| Guide recess portion being continuous/discontinuous | Continuous | Continuous | Continuous | Continuous | Continuous |
| Placement angle range from the wear indicator end portion | 340 | 30 | 30 | 30 | 30 |
| Ratio L/K | 0.2 | 0.2 | 1.0 | 0.3 | 1.5 |
| Visibility (index value) | 116 | 119 | 120 | 120 | 119 |
| Cracking resistance (index value) | 115 | 118 | 120 | 118 | 119 |

Reference Signs List

1 Pneumatic tire
2 Side protector
10 Wear indicator hole

11 Guide recess portion
11A to 11D, 100A to 100E Guide recess portion
12 Bead filler
13 Carcass layer
14 Belt layer
15 Tread rubber
16 Sidewall rubber
17 Rim cushion rubber
18 Shock absorbing rubber
19 Rim check line
20A, 20B and 20C Recess portion
21 Chafer
22, 23 Sub-chafer
30 Bead core
31 Tread portion
121 Lower filler
122 Upper filler
160 Side profile
CL Tire equatorial plane

**Claims**

1. A pneumatic tire (1), comprising:

   a carcass layer (13) extending between a pair of left and right bead cores (30);
   a side protector (2) provided on a side wall portion located on a tire outer side of the carcass layer (13), rising from a side profile of the tire (1) to the tire outer side, and extending in a tire circumferential direction;
   a wear indicator hole (10) provided on a surface of the side protector (2), extending from the surface of the side protector (2) to a tire inner side, and serving as an indication of wear of the side protector (2); and
   a guide recess portion (11A, 11B, 11C, 11D, 100A, 101A, 102A, 103A, 104A, 100B, 101B, 102B, 103B, 104B, 100C) provided on the surface of the side protector (2) and extending from the surface of the side protector (2) to the tire inner side,
   the guide recess portion (11A, 11B, 11C, 11D, 100A, 101A, 102A, 103A, 104A, 100B, 101B, 102B, 103B, 104B, 100C) terminating in a vicinity of the wear indicator hole (10), the guide recess portion (11A, 11B, 11C, 11D, 100A, 101A, 102A, 103A, 104A, 100B, 101B, 102B, 103B, 104B, 100C) separating from the wear indicator hole (10) and, in a projection view in the tire circumferential direction perpendicular to a surface of the side wall portion, at least a portion of the guide recess portion (11A, 11B, 11C, 11D, 100A, 101A, 102A, 103A, 104A, 100B, 101B, 102B, 103B, 104B, 100C) overlapping the wear indicator hole (10).

2. The pneumatic tire (1) according to claim 1, wherein $0.8 \leq A/K \leq 2.4$ is satisfied, where K is a maximum width of the wear indicator hole (10) on the surface of the side protector (2) and A is a shortest distance from the wear indicator hole (10) to the guide recess portion (11A, 11B, 11C, 11D, 100A, 101A, 102A, 103A, 104A, 100B, 101B, 102B, 103B, 104B, 100C) on the surface of the side protector (2).

3. The pneumatic tire (1) according to claim 1 or 2, wherein

   $0.1 \leq d/D \leq 0.4$ is satisfied for a ratio d/D, where D is a depth of the wear indicator hole (10) from the surface of the side protector (2) and d is a depth of the guide recess portion (11A, 11B, 11C, 11D, 100A, 101A, 102A, 103A, 104A, 100B, 101B, 102B, 103B, 104B, 100C) from the surface of the side protector (2), and
   $1.05 \leq T/D \leq 1.20$ is satisfied for a ratio T/D, where T is a distance from a bottom of the wear indicator hole (10) to the carcass layer (13).

4. The pneumatic tire (1) according to any one of claims 1 to 3, wherein $0.2 \leq W/K \leq 0.5$ is satisfied, where W is a width of the guide recess portion (11A, 11B, 11C, 11D, 100A, 101A, 102A, 103A, 104A, 100B, 101B, 102B, 103B, 104B, 100C) in a direction orthogonal to the tire circumferential direction on the surface of the side protector (2) and K is a maximum width of the wear indicator hole (10) on the surface of the side protector (2).

5. The pneumatic tire (1) according to any one of claims 1 to 4, wherein the guide recess portion (11A, 11B, 11C, 11D, 100A, 101A, 102A, 103A, 104A, 100B, 101B, 102B, 103B, 104B, 100C) extends continuously in the tire circumferential direction.

6. The pneumatic tire according to any one of claims 1 to 5, wherein the guide recess portion (11A, 11B, 11C, 11D, 100A, 101A, 102A, 103A, 104A, 100B, 101B, 102B, 103B, 104B, 100C) is provided only in a range from a position of an end portion of the wear indicator hole (10) to a position of 10° in the tire circumferential direction on the surface of the side protector (2).

7. The pneumatic tire (1) according to any one of claims 1 to 6, further comprising another recess portion (20A, 20B, 20C) provided in the vicinity of the wear indicator hole (10) and extending in the tire circumferential direction, the other recess portion (20A, 20B, 20C) being provided at a position that does not overlap the wear indicator hole (10) in a projection view in the tire circumferential direction, wherein
$0.3 \le L/K \le 1.5$ is satisfied, where K is a maximum width of the wear indicator hole (10) and L is a distance between the wear indicator hole (10) and the other recess portion (20A, 20B, 20C) on the surface of the side protector (2).

8. The pneumatic tire (1) according to any one of claims 1 to 7, wherein
the side protector (2) is provided between a position of 0.1 SH and a position of 0.6 SH from a tire tread surface with respect to a tire cross-sectional height SH.

9. A pneumatic tire (1), comprising:

a carcass layer (13) extending between a pair of left and right bead cores (30);
a side protector (2) provided on a side wall portion located on a tire outer side of the carcass layer (13), rising from a side profile of the tire (1) to the tire outer side, and extending in a tire circumferential direction;
a wear indicator hole (10) provided on a surface of the side protector (2), extending from the surface of the side protector (2) to a tire inner side, and serving as an indication of wear of the side protector (2);
a guide recess portion (11A, 11B, 11C, 11D, 100A, 101A, 102A, 103A, 104A, 100B, 101B, 102B, 103B, 104B, 100C) provided on the surface of the side protector (2) and extending from the surface of the side protector (2) to the tire inner side,
the guide recess portion (11A, 11B, 11C, 11D, 100A, 101A, 102A, 103A, 104A, 100B, 101B, 102B, 103B, 104B, 100C) terminating in a vicinity of the wear indicator hole (10) and, in a projection view in the tire circumferential direction, at least a portion of the guide recess portion (11A, 11B, 11C, 11D, 100A, 101A, 102A, 103A, 104A, 100B, 101B, 102B, 103B, 104B, 100C) overlapping the wear indicator hole (10), and
another recess portion (20A, 20B, 20C) provided in the vicinity of the wear indicator hole (10) and extending in the tire circumferential direction, wherein
the other recess portion (20A, 20B, 20C) being provided at a position that does not overlap the wear indicator hole (10) in a projection view in the tire circumferential direction, and
$0.3 \le L/K \le 1.5$ is satisfied, where K is a maximum width of the wear indicator hole (10) and L is a distance between the wear indicator hole (10) and the other recess portion (20A, 20B, 20C) on the surface of the side protector (2).

**Patentansprüche**

1. Luftreifen (1), umfassend:

eine Karkassenschicht (13), die sich zwischen einem Paar von linken und rechten Wulstkernen (30) erstreckt,
einen Seitenschutz (2), der an einem Seitenwandabschnitt bereitgestellt ist, der sich auf einer Reifenaußenseite der Karkassenschicht (13) befindet, der von einem Seitenprofil des Reifens (1) zu der Reifenaußenseite ansteigt und sich in einer Reifenumfangsrichtung erstreckt;
ein Abnutzungsanzeigeloch (10), das auf einer Oberfläche des Seitenschutzes (2) bereitgestellt ist, das sich von der Oberfläche des Seitenschutzes (2) zu einer Reifeninnenseite erstreckt und als eine Anzeige der Abnutzung des Seitenschutzes (2) dient; und
einen Führungsvertiefungsabschnitt (11A, 11B, 11C, 11D, 100A, 101A, 102A, 103A, 104A, 100B, 101B, 102B, 103B, 104B, 100C), der auf der Oberfläche des Seitenschutzes (2) bereitgestellt ist und sich von der Oberfläche des Seitenschutzes (2) zu der Reifeninnenseite erstreckt,
wobei der Führungsvertiefungsabschnitt (11A, 11B, 11C, 11D, 100A, 101A, 102A, 103A, 104A, 100B, 101B, 102B, 103B, 104B, 100C) in einer Nähe des Abnutzungsanzeigelochs (10) blind endet, wobei der Führungsvertiefungsabschnitt (11A, 11B, 11C, 11D, 100A, 101A, 102A, 103A, 104A, 100B, 101B, 102B, 103B, 104B, 100C) von dem Abnutzungsanzeigeloch (10) getrennt ist und in einer Projektionsansicht in der Reifenumfangsrichtung senkrecht zu einer Oberfläche des Seitenwandabschnitts mindestens ein Abschnitt des Führungsvertiefungsabschnitts (11A, 11B, 11C, 11D, 100A, 101A, 102A, 103A, 104A, 100B, 101B, 102B. 103B, 104B, 100C) das Abnutzungsanzeigeloch (10) überlappt.

2. Luftreifen (1) gemäß Anspruch 1, wobei $0,8 \leq A/K \leq 2,4$ erfüllt ist, wobei K eine maximale Breite des Abnutzungsanzeigelochs (10) auf der Oberfläche des Seitenschutzes (2) ist und A ein kürzester Abstand von dem Abnutzungsanzeigeloch (10) zu dem Führungsvertiefungsabschnitt (11A, 11B, 11C, 11D, 100A, 101A, 102A, 103A, 104A, 100B, 101B, 102B, 103B, 104B, 100C) auf der Oberfläche des Seitenschutzes (2) ist.

3. Luftreifen (1) gemäß Anspruch 1 oder 2, wobei

$0,1 \leq d/D \leq 0,4$ für ein Verhältnis d/D erfüllt ist, wobei D eine Tiefe des Abnutzungsanzeigelochs (10) von der Oberfläche des Seitenschutzes (2) ist und d eine Tiefe des Führungsvertiefungsabschnitts (11A, 11B, 11C, 11D, 100A, 101A, 102A, 103A, 104A, 100B, 101B, 102B, 103B, 104B, 100C) von der Oberfläche des Seitenschutzes (2) ist, und
$1,05 \leq T/D \leq 1,20$ für ein Verhältnis T/D erfüllt ist, wobei T ein Abstand von einem Boden des Abnutzungsanzeigelochs (10) zu der Karkassenschicht (13) ist.

4. Luftreifen (1) gemäß einem der Ansprüche 1 bis 3, wobei $0,2 \leq W/K \leq 0,5$ erfüllt ist, wobei W eine Breite des Führungsvertiefungsabschnitts (11A, 11B, 11C, 11D, 100A, 101A, 102A, 103A, 104A, 100B, 101B, 102B, 103B, 104B, 100C) in einer Richtung orthogonal zu der Reifenumfangsrichtung auf der Oberfläche des Seitenschutzes (2) ist und K eine maximale Breite des Abnutzungsanzeigelochs (10) auf der Oberfläche des Seitenschutzes (2) ist.

5. Luftreifen (1) gemäß einem der Ansprüche 1 bis 4, wobei sich der Führungsvertiefungsabschnitt (11A, 11B, 11C, 11D, 100A, 101A, 102A, 103A, 104A, 100B, 101B, 102B, 103B, 104B, 100C) in der Reifenumfangsrichtung durchgängig erstreckt.

6. Luftreifen gemäß einem der Ansprüche 1 bis 5, wobei der Führungsvertiefungsabschnitt (11A, 11B, 11C, 11D, 100A, 101A, 102A, 103A, 104A, 100B, 101B, 102B, 103B, 104B, 100C) nur in einem Bereich von einer Position eines Endabschnitts des Abnutzungsanzeigelochs (10) zu einer Position von 10° in der Reifenumfangsrichtung auf der Oberfläche des Seitenschutzes (2) bereitgestellt ist.

7. Luftreifen (1) gemäß einem der Ansprüche 1 bis 6, ferner umfassend einen anderen Vertiefungsabschnitt (20A, 20B, 20C), der in der Nähe des Abnutzungsanzeigelochs (10) bereitgestellt ist und sich in der Reifenumfangsrichtung erstreckt, wobei der andere Vertiefungsabschnitt (20A, 20B, 20C) an einer Position bereitgestellt ist, die das Abnutzungsanzeigeloch (10) in einer Projektionsansicht in der Reifenumfangsrichtung nicht überlappt, wobei
$0,3 \leq L/K \leq 1,5$ erfüllt ist, wobei K eine maximale Breite des Abnutzungsanzeigelochs (10) ist und L ein Abstand zwischen dem Abnutzungsanzeigeloch (10) und dem anderen Vertiefungsabschnitt (20A, 20B, 20C) auf der Oberfläche des Seitenschutzes (2) ist.

8. Luftreifen (1) gemäß einem der Ansprüche 1 bis 7, wobei
der Seitenschutz (2) zwischen einer Position von 0,1 SH und einer Position von 0,6 SH von einer Reifenlaufflächenoberfläche in Bezug auf eine Reifenquerschnittshöhe SH bereitgestellt ist.

9. Luftreifen (1), umfassend:

eine Karkassenschicht (13), die sich zwischen einem Paar von linken und rechten Wulstkernen (30) erstreckt;
einen Seitenschutz (2), der an einem Seitenwandabschnitt bereitgestellt ist, der sich auf einer Reifenaußenseite der Karkassenschicht (13) befindet, der von einem Seitenprofil des Reifens (1) zu der Reifenaußenseite ansteigt und sich in einer Reifenumfangsrichtung erstreckt;
ein Abnutzungsanzeigeloch (10), das auf einer Oberfläche des Seitenschutzes (2) bereitgestellt ist, das sich von der Oberfläche des Seitenschutzes (2) zu einer Reifeninnenseite erstreckt und als eine Anzeige der Abnutzung des Seitenschutzes (2) dient;
einen Führungsvertiefungsabschnitt (11A, 11B, 11C, 11D, 100A, 101A, 102A, 103A, 104A, 100B, 101B, 102B, 103B, 104B, 100C), der auf der Oberfläche des Seitenschutzes (2) bereitgestellt ist und sich von der Oberfläche des Seitenschutzes (2) zu der Reifeninnenseite erstreckt,

wobei der Führungsvertiefungsabschnitt (11A, 11B, 11C, 11D, 100A, 101A, 102A, 103A, 104A, 100B, 101B, 102B, 103B, 104B, 100C) in einer Nähe des Abnutzungsanzeigelochs (10) blind endet und in einer Projektionsansicht in der Reifenumfangsrichtung mindestens ein Abschnitt des Führungsvertiefungsabschnitts (11A, 11B, 11C, 11D, 100A, 101A, 102A, 103A, 104A, 100B, 101B, 102B, 103B, 104B, 100C) das Abnutzungsanzeigeloch (10) überlappt, und

einen anderen Vertiefungsabschnitt (20A, 20B, 20C), der in der Nähe des Abnutzungsanzeigelochs (10) bereitgestellt ist und sich in der Reifenumfangsrichtung erstreckt, wobei

der andere Vertiefungsabschnitt (20A, 20B, 20C) an einer Position bereitgestellt wird, die das Abnutzungsanzeigeloch (10) in einer Projektionsansicht in der Reifenumfangsrichtung nicht überlappt, und

$0,3 \leq L/K \leq 1,5$ erfüllt ist, wobei K eine maximale Breite des Abnutzungsanzeigelochs (10) ist und L ein Abstand zwischen dem Abnutzungsanzeigeloch (10) und dem anderen Vertiefungsabschnitt (20A, 20B, 20C) auf der Oberfläche des Seitenschutzes (2) ist.

## Revendications

1. Pneumatique (1), comprenant :

   une couche de carcasse (13) s'étendant entre une paire de tringles de talon (30) gauche et droite,
   un protecteur latéral (2) fourni sur une partie de flanc située sur un côté externe de pneumatique de la couche de carcasse (13), s'élevant à partir d'un profil latéral du pneumatique (1) jusqu'au côté externe de pneumatique et s'étendant dans une direction circonférentielle de pneumatique ;
   un trou indicateur d'usure (10) fourni sur une surface du protecteur latéral (2), s'étendant à partir de la surface du protecteur latéral (2) jusqu'à un côté interne de pneumatique et agissant comme une indication d'usure du protecteur latéral (2) ; et
   une partie évidement de guidage (11A, 11B, 11C, 11D, 100A, 101A, 102A, 103A, 104A, 100B, 101B, 102B, 103B, 104B, 100C) fournie sur la surface du protecteur latéral (2) et s'étendant à partir de la surface du protecteur latéral (2) jusqu'au côté interne de pneumatique,
   la partie évidement de guidage (11A, 11B, 11C, 11D, 100A, 101A, 102A, 103A, 104A, 100B, 101B, 102B, 103B, 104B, 100C) s'interrompant à proximité du trou indicateur d'usure (10), la partie évidement de guidage (11A, 11B, 11C, 11D, 100A, 101A, 102A, 103A, 104A, 100B, 101B, 102B, 103B, 104B, 100C) étant séparée du trou indicateur d'usure (10) et, dans une vue de projection dans la direction circonférentielle de pneumatique perpendiculaire à une surface de la partie de flanc, au moins une partie de la partie évidement de guidage (11A, 11B, 11C, 11D, 100A, 101A, 102A, 103A, 104A, 100B, 101B, 102B, 103B, 104B, 100C) chevauchant le trou indicateur d'usure (10).

2. Pneumatique (1) selon la revendication 1, dans lequel une relation $0,8 \leq A/K \leq 2,4$ est satisfaite, où K est une largeur maximale du trou indicateur d'usure (10) sur la surface du protecteur latéral (2) et A est une distance la plus courte à partir du trou indicateur d'usure (10) jusqu'à la partie évidement de guidage (11A, 11B, 11C, 11D, 100A, 101A, 102A, 103A, 104A, 100B, 101B, 102B, 103B, 104B, 100C) sur la surface du protecteur latéral (2).

3. Pneumatique (1) selon la revendication 1 ou 2, dans lequel

   une relation $0,1 \leq d/D \leq 0,4$ est satisfaite pour un rapport d/D, où D est une profondeur du trou indicateur d'usure (10) à partir de la surface du protecteur latéral (2) et d est une profondeur de la partie évidement de guidage (11A, 11B, 11C, 11D, 100A, 101A, 102A, 103A, 104A, 100B, 101B, 102B, 103B, 104B, 100C) à partir de la surface du protecteur latéral (2), et
   une relation $1,05 \leq T/D \leq 1,20$ est satisfaite pour un rapport T/D, où T est une distance à partir d'un fond du trou indicateur d'usure (10) jusqu'à la couche de carcasse (13).

4. Pneumatique (1) selon l'une quelconque des revendications 1 à 3, dans lequel une relation $0,2 \leq W/K \leq 0,5$ est satisfaite, où W est une largeur de la partie évidement de guidage (11A, 11B, 11C, 11D, 100A, 101A, 102A, 103A, 104A, 100B, 101B, 102B, 103B, 104B, 100C) dans une direction orthogonale à la direction circonférentielle de pneumatique sur la surface du protecteur latéral (2) et K est une largeur maximale du trou indicateur d'usure (10) sur la surface du protecteur latéral (2).

5. Pneumatique (1) selon l'une quelconque des revendications 1 à 4, dans lequel la partie évidement de guidage (11A, 11B, 11C, 11D, 100A, 101A, 102A, 103A, 104A, 100B, 101B, 102B, 103B, 104B, 100C) s'étend en continu dans la direction circonférentielle de pneumatique.

6. Pneumatique selon l'une quelconque des revendications 1 à 5, dans lequel la partie évidement de guidage (11A, 11B, 11C, 11D, 100A, 101A, 102A, 103A, 104A, 100B, 101B, 102B, 103B, 104B, 100C) est fournie uniquement dans une plage allant d'une position d'une partie d'extrémité du trou indicateur d'usure (10) à une position de 10° dans la direction circonférentielle de pneumatique sur la surface du protecteur latéral (2).

7. Pneumatique (1) selon l'une quelconque des revendications 1 à 6, comprenant en outre une autre partie évidement (20A, 20B, 20C) fournie à proximité du trou indicateur d'usure (10) et s'étendant dans la direction circonférentielle de pneumatique, l'autre partie évidement (20A, 20B, 20C) étant fournie au niveau d'une position qui ne chevauche pas le trou indicateur d'usure (10) dans une vue de projection dans la direction circonférentielle de pneumatique, dans lequel
une relation $0,3 \leq L/K \leq 1,5$ est satisfaite, où K est une largeur maximale du trou indicateur d'usure (10) et L est une distance entre le trou indicateur d'usure (10) et l'autre partie évidement (20A, 20B, 20C) sur la surface du protecteur latéral (2).

8. Pneumatique (1) selon l'une quelconque des revendications 1 à 7, dans lequel
le protecteur latéral (2) est fourni entre une position de 0,1 SH et une position de 0,6 SH à partir d'une surface de bande de roulement de pneumatique par rapport à une hauteur de section transversale de pneumatique SH.

9. Pneumatique (1), comprenant :

une couche de carcasse (13) s'étendant entre une paire de tringles de talon (30) gauche et droite ;
un protecteur latéral (2) fourni sur une partie de flanc située sur un côté externe de pneumatique de la couche de carcasse (13), s'élevant à partir d'un profil latéral du pneumatique (1) jusqu'au côté externe de pneumatique et s'étendant dans une direction circonférentielle de pneumatique ;
un trou indicateur d'usure (10) fourni sur une surface du protecteur latéral (2), s'étendant à partir de la surface du protecteur latéral (2) jusqu'à un côté interne de pneumatique et agissant comme une indication d'usure du protecteur latéral (2) ;
une partie évidement de guidage (11A, 11B, 11C, 11D, 100A, 101A, 102A, 103A, 104A, 100B, 101B, 102B, 103B, 104B, 100C) fournie sur la surface du protecteur latéral (2) et s'étendant à partir de la surface du protecteur latéral (2) jusqu'au côté interne de pneumatique,
la partie évidement de guidage (11A, 11B, 11C, 11D, 100A, 101A, 102A, 103A, 104A, 100B, 101B, 102B, 103B, 104B, 100C) s'interrompant à proximité du trou indicateur d'usure (10) et, dans une vue de projection dans la direction circonférentielle de pneumatique, au moins une partie de la partie évidement de guidage (11A, 11B, 11C, 11D, 100A, 101A, 102A, 103A, 104A, 100B, 101B, 102B, 103B, 104B, 100C) chevauchant le trou indicateur d'usure (10), et
une autre partie évidement (20A, 20B, 20C) fournie à proximité du trou indicateur d'usure (10) et s'étendant dans la direction circonférentielle de pneumatique, dans lequel
l'autre partie évidement (20A, 20B, 20C) est fournie au niveau d'une position qui ne chevauche pas le trou indicateur d'usure (10) dans une vue de projection dans la direction circonférentielle du pneumatique, et
une relation $0,3 \leq L/K \leq 1,5$ est satisfaite, où K est une largeur maximale du trou indicateur d'usure (10) et L est une distance entre le trou indicateur d'usure (10) et l'autre partie évidement (20A, 20B, 20C) sur la surface du protecteur latéral (2).

FIG. 1

FIG. 2

FIG. 3

FIG. 4

FIG. 5

FIG. 6

FIG. 7

FIG. 8

TIRE RADIAL
DIRECTION

11A

11B

K

A

10

TIRE CIRCUMFERENTIAL
DIRECTION

# FIG. 9

TIRE RADIAL
DIRECTION

11A

11B

K

A

11C

10

11D

TIRE CIRCUMFERENTIAL
DIRECTION

# FIG. 10

TIRE CIRCUMFERENTIAL
DIRECTION

11A  $\alpha$  10  $\alpha$  11B

H

P

# FIG. 11

TIRE CIRCUMFERENTIAL
DIRECTION

$\alpha$    $\alpha$

H

11A  10  11B

# FIG. 12

TIRE RADIAL DIRECTION

104A    103A    102A    101A    100A    10    100B    101B    102B    103B    104B

TIRE CIRCUMFERENTIAL DIRECTION

# FIG. 13

20C

TIRE RADIAL DIRECTION

100C    10    100C

TIRE CIRCUMFERENTIAL DIRECTION

# FIG. 14

TIRE RADIAL
DIRECTION

11A'   10   11B'

TIRE CIRCUMFERENTIAL
DIRECTION

# FIG. 15

TIRE RADIAL
DIRECTION

100E   100D   10   100D   100E

TIRE CIRCUMFERENTIAL
DIRECTION

# FIG. 16

TIRE RADIAL DIRECTION

TIRE CIRCUMFERENTIAL DIRECTION

100C 10 100C

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008174139 A
- US 4144921 A
- EP 3212444A0 A
- WO 2007123184 A1